# EUROPÄISCHE PATENTANMELDUNG

(11) **EP 4 729 329 A1**
(43) Veröffentlichungstag der Anmeldung: **22.04.2026**
(21) Anmeldenummer: 25202944.2
(22) Anmeldetag: 18.09.2025
(51) Int. Cl.: B60L 1/00, B60R 16/00, B60L 58/14

(54) **STROMVERSORGUNGSSCHALTUNG ZUR STROMVERSORGUNG EINES ELEKTRISCH BETRIEBENEN FAHRZEUGS**

(30) Priorität: 15.10.2024 DE 102024129811
(71) Anmelder: STILL GmbH, 22113 Hamburg (DE); Linde Material Handling GmbH, 63743 Aschaffenburg (DE)
(72) Erfinder: Wilhelm, Jörg, 63743 Aschaffenburg (DE); Althof, Carsten, 21031 Hamburg (DE); Götzinger, Jonathan, 63322 Rödermark (DE)
(74) Vertreter: Patentship Patentanwaltgesellschaft

(57) **Zusammenfassung**

Die Erfindung betrifft eine Stromversorgungseinrichtung (200) zur Stromversorgung eines elektrisch betriebenen Fahrzeugs mittels eines Batteriepacks (110), insbesondere eines Flurförderzeugs. Die Stromversorgungseinrichtung umfasst eine analoge Stromversorgungsschaltung (220), die an eine Batteriespannung (111) des Batteriepacks anschließbar ist, und einen Steuereingang (224) zum Erhalt eines Steuersignals (224a) umfasst, sowie einen Spannungsversorgungsausgang (222) und einen Hilfsspannungsausgang 223 zum Bereitstellen der Batteriespannung basierend auf dem Steuersignal. Die Stromversorgungseinrichtung umfasst einen Spannungswandler (210) mit einem Wandlereingang (211), der an den Spannungsversorgungsausgang der analogen Stromversorgungsschaltung (220) angeschlossen ist; und einem Wandlerausgang (213). Der Spannungswandler ist ausgebildet, die an dem Wandlereingang anliegende Batteriespannung in eine Versorgungsspannung (214) zu wandeln und zur Stromversorgung der Batteriekomponenten an dem Wandlerausgang bereitzustellen. Die analoge Stromversorgungsschaltung ist ausgebildet, bei einer durch das Steuersignal angezeigten kritischen Tiefenentladung des Batteriepacks die Batteriespannung an den Spannungsversorgungsausgängen (222) und (223) nicht mehr bereitzustellen, um das Batteriepack vor weiterer Entladung zu schützen.

## Beschreibung

Die Erfindung betrifft das Gebiet der elektrisch betriebenen Fahrzeuge, insbesondere Flurförderzeuge, und deren Systeme zur Stromversorgung der elektrisch betriebenen Fahrzeuge. Insbesondere betrifft die Erfindung eine Schaltung zur Stromversorgung eines elektrisch betriebenen Fahrzeugs und ein Verfahren zur kontinuierlichen internen und externen Spannungsversorgung von Li-Ionen Batterien für elektrisch angetriebene Flurförderzeuge.

Flurförderzeuge sind mit einer Vielzahl von elektrischen Steuerungen und Anbaugeräten wie zum Beispiel Telematikeinheiten, schlüssellosen Zugangseinrichtungen oder Terminals für das Auftrags- und Leitsystem ausgestattet. Diese sollen auch im ausgeschalteten Zustand des Fahrzeugs weiterhin mit elektrischer Spannung versorgt werden, um das erneute Starten des Fahrzeugs komfortabel ohne das vorherige Aktivieren zum Beispiel über einen Knopf zu ermöglichen. Außerdem können so Wartezeiten des Fahrers auf das Auftrags- und Leitsystem vermieden werden. Auch für autonome Flurförderzeuge ist es von großer Wichtigkeit, dass das Automatisierungssystem ständig mit Spannung versorgt ist, um die nächsten Fahraufträge empfangen und ausführen zu können.

Ein bekanntes Steuerungssystem zur Steuerung eines Batteriesystems sowie eines batterie-elektrisch betriebenen Fahrzeugs ist in der Druckschrift DE 10 2018 106 369 A1 beschrieben.

Der vorliegenden Erfindung liegt die Aufgabe zugrunde, eine kosten- und aufwandsgünstige Spannungsversorgung für ein elektrisch betriebenes Fahrzeug, insbesondere ein Flurförderzeug zu schaffen, welche das Fahrzeug permanent mit Spannung versorgen kann, dabei aber die Sicherheit des Fahrzeugs gewährleistet und sicherstellt, dass es zu keiner Tiefenentladung des Fahrzeugs kommt.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf dem im Folgenden dargestellten und in den unten beschriebenen Figuren weiter ausgeführtem Konzept einer Schaltung zur Spannungsversorgung des Fahrzeugs und der internen Komponenten der Batterie, beispielsweise der Li-Ionen Batterie ohne eigenen Controller mithilfe einer analogen Schaltung und einem integrierten Spannungswandler. Diese kann als Schutz vor kritischer Tiefenentladung durch das BMS (Batteriemanagementsystem) komplett deaktiviert werden, um die Batterie zu schützen. Über einen externen Eingang, zum Beispiel einen Taster oder über ein Datenpaket einer Kommunikationsschnittstelle, wie zum Beispiel einem CAN-Bus, kann die BPS (Battery Power Supply bzw. Stromversorgungseinrichtung) geweckt werden.

Die vorgestellte erfinderische Lösung eignet sich auch dazu, neben diesen externen Verbrauchern auch interne Komponenten, wie beispielsweise Steuerungen in Li-lonen Batterien, die eine andere Spannung als die Batteriespannung benötigen, zu versorgen. Bei Nutzung der hier vorgestellten erfinderischen Lösung kann auf den Einsatz externer DC/DC-Wandler verzichtet werden, um diese Spannung bereitzustellen.

Batterieschütze werden in Li-Ionen Batterien eingesetzt, um Überlastungen und Tiefentladungen zu vermeiden und die Batterielebensdauer zu verlängern. Sie stellen außerdem eine wichtige Sicherheitsfunktionen dar. Bei Nutzung der hier vorgestellten erfinderischen Lösung, um das Fahrzeug konstant mit Strom zu versorgen, kann darauf verzichtet werden, diese Batterieschütze permanent geschlossen zu halten, was eine permanente Verlustleistung zur Folge hätte. Die Funktion der Abschalteinrichtung (Batterieschütz) kann weiterhin regelmäßig durchgeführt werden, um ihre Sicherheit zu gewährleisten.

Ferner kann auf eine zweite Steuerung zur Bereitstellung einer strombegrenzten Leistung verzichtet werden, was zu einer signifikanten Kosteneinsparung und Aufwandsreduktion führt. Je nach Ausführungsvariante dieser zweiten Steuerung wäre diese mit einer separaten Software ausgestattet, die gewartet werden muss. Außerdem verbraucht diese Komponente Platz in der Batterie. Alle diese zusätzlichen Komponenten können bei Nutzung der erfindungsgemäßen Stromversorgungseinrichtung eingespart werden. Die hier vorgestellte erfinderische Lösung stellt sicher, dass es nicht zu einer unerwünschten Tiefenentladung oder einer Überladung kommt.

Gemäß einem ersten Aspekt der Erfindung wird die oben beschriebene Aufgabe gelöst durch eine Stromversorgungseinrichtung zur Stromversorgung eines elektrisch betriebenen Fahrzeugs mittels eines Batteriepacks, insbesondere eines Flurförderzeugs, wobei die Stromversorgungseinrichtung folgendes umfasst: eine analoge Stromversorgungsschaltung, die an eine Batteriespannung des Batteriepacks anschließbar ist, und einen Steuereingang zum Erhalt eines Steuersignals umfasst, sowie einen Spannungsversorgungsausgang zum Bereitstellen der Batteriespannung basierend auf dem Steuersignal; einen Spannungswandler mit einem Wandlereingang, der an den Spannungsversorgungsausgang der analogen Stromversorgungsschaltung angeschlossen ist; und einem Wandlerausgang, wobei der Spannungswandler ausgebildet ist, die an dem Wandlereingang anliegende Batteriespannung in eine Versorgungsspannung zu wandeln und sowohl zur Stromversorgung von Komponenten des Batteriepacks bzw. der Batterie an dem Wandlerausgang als auch ungewandelt als Hilfsspannung dem Fahrzeug bereitzustellen; wobei die analoge Stromversorgungsschaltung ausgebildet ist, bei einer durch das Steuersignal angezeigten kritischen Tiefenentladung des Batteriepacks die Batteriespannung an dem Spannungsversorgungsausgang und an einem Hilfsspannungsausgang nicht mehr bereitzustellen, um das Batteriepack vor weiterer Entladung zu schützen.

Eine solche Stromversorgungseinrichtung erlaubt eine kosten- und aufwandsgünstige Spannungsversorgung für ein elektrisch betriebenes Fahrzeug, insbesondere ein Flurförderzeug. Die Stromversorgungseinrichtung kann das Fahrzeug permanent mit Spannung versorgen und dabei zugleich die Sicherheitsanforderungen des Fahrzeugs erfüllen, indem sie sicherstellt, dass es zu keiner Tiefenentladung des Fahrzeugs kommt.

Die Stromversorgungseinrichtung ermöglicht eine Spannungsversorgung des Fahrzeugs und der internen Komponenten der Batterie ohne eigenen Controller mithilfe einer analogen Schaltung und einem integrierten Spannungswandler. Der Spannungswandler kann als Schutz vor kritischer Tiefenentladung durch das BMS komplett deaktiviert werden, um die Batterie zu schützen. Die Stromversorgungseinrichtung eignet sich auch dazu, neben diesen externen Verbrauchern auch interne Komponenten, wie beispielsweise Steuerungen in Li-Ionen Batterien, die eine andere Spannung als die Batteriespannung benötigen, zu versorgen, die Herab- oder Heraufsetzung der Spannung kann durch den Spannungswandler durchgeführt werden. Bei Nutzung der hier vorgestellten Stromversorgungseinrichtung kann auf den Einsatz externer DC/DC-Wandler verzichtet werden, um diese Spannung bereitzustellen.

Gemäß einer beispielhaften Ausführungsform der Stromversorgungseinrichtung ist die analoge Stromversorgungsschaltung ausgebildet, die Batteriespannung basierend auf analoger Logik an dem Spannungsversorgungsausgang bereitzustellen.

Damit ermöglicht die Stromversorgungseinrichtung eine Spannungsversorgung des Fahrzeugs und der internen Komponenten der Batterie ohne eigenen Controller mithilfe einer analogen Schaltung und einem integrierten Spannungswandler. Eine analoge Schaltung ist wesentlich weniger komplex und aufwandsgünstiger herzustellen als die Verwendung eines Controllers, Prozessors oder Mikrocontrollers.

Gemäß einer beispielhaften Ausführungsform der Stromversorgungseinrichtung umfasst die analoge Stromversorgungsschaltung einen Hilfsspannungsanschluss zur Bereitstellung einer Hilfsspannung an einem Fahrzeug-Ladeanschluss.

Damit kann die Stromversorgungseinrichtung dem Fahrzeug zusätzlich eine Hilfsspannung zur Verfügung stellen.

Gemäß einer beispielhaften Ausführungsform der Stromversorgungseinrichtung umfasst die Stromversorgungseinrichtung einen Stromsensor, der an die Batteriespannung des Batteriepacks anschließbar ist und ausgebildet ist, einen Eigenverbrauch der Stromversorgungseinrichtung und einen entnommenen Strom an dem Hilfsspannungsanschluss zu erfassen.

Mit diesem Stromsensor kann der Batteriestrom erfasst werden, der durch die analoge Stromversorgungsschaltung und den Spannungswandler fließt und zusätzlich der an dem Hilfsspannungsanschluss entnommene Strom. Der erfasste Batteriestrom kann an eine externe Steuerung, zum Beispiel das BMS übertragen werden, welche die Stromversorgungseinrichtung entsprechend ansteuern kann. Beispielsweise kann der Spannungswandler bei zu hohem Batteriestrom abgeschaltet werden oder in der Leistung reduziert werden.

Gemäß einer beispielhaften Ausführungsform der Stromversorgungseinrichtung umfasst der Stromsensor einen Messwertausgang, der ausgebildet ist, eine Information über den erfassten Batteriestrom anzuzeigen, insbesondere einem Batteriemanagementsystem anzuzeigen.

Diese Information kann beispielsweise ein durchschnittlicher Batteriestrom sein, der über eine bestimmte Zeitspanne gemessen wurde. Das BMS kann mit dieser Information überprüfen, ob die Stromversorgungseinrichtung innerhalb ihrer Vorgaben betrieben wird. Bei zu hohem Batteriestrom kann sie den Spannungswandler abschalten bzw. in der Leistung begrenzen.

Gemäß einer beispielhaften Ausführungsform der Stromversorgungseinrichtung umfasst die analoge Stromversorgungsschaltung einen Wake-up Eingang, der ausgebildet ist, ein Wake-up Signal zu empfangen, wobei die analoge Stromversorgungsschaltung ausgebildet ist, bei Empfang des Wake-up Signals die Batteriespannung wieder an dem Spannungsversorgungsausgang bereitzustellen.

Damit kann die Stromversorgungseinrichtung über das Wake-up Signal wieder in den normalen Betriebszustand überführt werden, in dem die Batteriespannung dem Spannungswandler zur Wandlung zur Verfügung gestellt wird, zum Beispiel wenn wieder eine Spannungsversorgung über eine Ladestation zur Verfügung steht.

Gemäß einer beispielhaften Ausführungsform der Stromversorgungseinrichtung ist das Wake-up Signal ein Signal eines Tasters; oder das Wake-up Signal ist ein Datenpaket einer Kommunikationsschnittstelle, insbesondere ein CAN-Bus Datenpaket.

Mit einem Taster kann die Stromversorgungseinrichtung auf einfache Weise manuell in den normalen Betriebszustand zurückversetzt werden. Der Fahrer kann diesen Taster beispielsweise betätigen, wenn die Batterie an einer Ladestation angeschlossen ist, oder auch in einem Notfall, bei dem bereits eine kritische Tiefenentladung vorliegt, der Fahrer jedoch bestimmte elektrische Komponenten kurzfristig anschalten möchte, um Rettungskräfte herbeizurufen. Über ein Datenpaket einer Kommunikationsschnittstelle, beispielsweise ein CAN-Bus Datenpaket ist es auch möglich, die notwendige Energie zu übertragen, mit der das Fahrzeug im ausgeschalteten Zustand zumindest teilweise versorgt werden kann.

Damit kann über einen externen Eingang, zum Beispiel einen Taster oder über ein Datenpaket einer Kommunikationsschnittstelle, wie zum Beispiel einem CAN-Bus, die Stromversorgungseinrichtung geweckt werden und in den normalen Betriebszustand übergehen, in welchem das Fahrzeug mit Spannung versorgt wird.

Gemäß einer beispielhaften Ausführungsform der Stromversorgungseinrichtung umfasst die Stromversorgungseinrichtung eine Schmelzsicherung, die zwischem dem Hilfsspannungsanschluss der Stromversorgungsschaltung und dem Fahrzeug geschaltet ist; und eine Regelungseinheit, die ausgebildet ist, einen an dem Hilfsspannungsanschluss der Stromversorgungsschaltung bereitgestellten Ausgangsstrom auf einen Maximalwert zu begrenzen, der unterhalb einer Auslöseschwelle der Schmelzsicherung liegt.

Damit wird gewährleistet, dass der am Hilfsspannungsanschluss bereitgestellte Ausgangsstrom auf einen nicht-kritischen Wert begrenzt wird, so dass durch das Betreiben der Stromversorgungseinrichtung die Schmelzsicherung nicht auslöst.

Gemäß einer beispielhaften Ausführungsform der Stromversorgungseinrichtung ist der Spannungswandler ferner ausgebildet, die an dem Spannungsversorgungsausgang bereitgestellte Batteriespannung in eine Versorgungsspannung zur Stromversorgung elektrischer Komponenten des Batteriepacks zu wandeln, welche eine kleinere oder größere Versorgungsspannung benötigen als die von dem Batteriepack bereitgestellte Batteriespannung.

Über den Wandler können damit flexibel mehrere Spannungen aus der Batteriespannung erzeugt werden, abhängig vom Spannungsbedarf der jeweiligen elektrischen Komponenten des Fahrzeugs.

Gemäß einem zweiten Aspekt der Erfindung wird die oben beschriebene Aufgabe gelöst durch ein Batteriesystem für ein elektrisch betriebenes Fahrzeug, insbesondere ein Flurförderzeug, umfassend: eine Stromversorgungseinrichtung nach dem ersten Aspekt zur Stromversorgung des elektrisch betriebenen Fahrzeugs; ein Batteriepack mit einem ersten Anschluss zur Bereitstellung der Batteriespannung, wobei die analoge Stromversorgungsschaltung der Stromversorgungseinrichtung an die Batteriespannung des Batteriepacks elektrisch angeschlossen ist; und ein Batteriemanagementsystem zum Bereitstellen des Steuersignals an dem Steuereingang der analogen Stromversorgungsschaltung; wobei das Batteriemanagementsystem ausgebildet ist, bei Erkennen einer kritischen Tiefenentladung des Batteriepacks eine Information über die kritische Tiefenentladung des Batteriepacks durch das Steuersignal an die Stromversorgungseinrichtung zu übermitteln, um das Batteriepack vor weiterer Entladung zu schützen.

Bei einem solchen Batteriesystem wird anstatt einer Steuerung für die externe Spannungsversorgung und einem zusätzlichen DCDC-Wandler nur noch eine Komponente benötigt, nämlich die hier vorgestellte Stromversorgungseinrichtung. Dadurch können die Kosten gesenkt werden und es wird weniger Platz in der Batterie und im Batteriesystem benötigt.

Durch die hier vorgestellte Stromversorgungseinrichtung, die ohne Controller auskommt, wird die Integration erleichtert und der Aufwand und damit die Kosten für das Batteriesystem sinken.

Es lassen sich damit Aufwands- und Kosteneinsparungen im Rahmen von etwa 100 Euro pro Batteriepack erzielen.

Gemäß einem dritten Aspekt der Erfindung wird die oben beschriebene Aufgabe gelöst durch ein Flurförderzeug mit einem Batteriesystem gemäß dem zweiten Aspekt, wie oben beschrieben.

Ein solches Flurförderzeug kann durch die Stromversorgungseinrichtung permanent mit Spannung versorgt werden, ohne dass es dabei zu einer Tiefenentladung des Flurförderzeugs kommt.

Gemäß einem vierten Aspekt der Erfindung wird die oben beschriebene Aufgabe gelöst durch ein Verfahren zur Stromversorgung eines elektrisch betriebenen Fahrzeugs mit einem Batteriepack, insbesondere eines Flurförderzeugs, wobei das Verfahren folgendes umfasst: Empfangen eines Steuersignals an einem Steuereingang einer analogen Stromversorgungsschaltung einer Stromversorgungseinrichtung; Empfangen einer Batteriespannung an einem Batteriespannungseingang der analogen Stromversorgungsschaltung; Bereitstellen der Batteriespannung an einem Spannungsversorgungsausgang der analogen Stromversorgungsschaltung und an einem Hilfsspannungsanschluss basierend auf dem Steuersignal; Wandeln der an dem Spannungsversorgungsausgang bereitgestellten Batteriespannung in eine Versorgungsspannung durch einen Spannungswandler der analogen Stromversorgungsschaltung; und Bereitstellen der Versorgungsspannung zur Stromversorgung von Komponenten des Batteriepacks bzw. der Batterie an einem Wandlerausgang des Spannungswandlers; wobei bei einer durch das Steuersignal angezeigten kritischen Tiefenentladung des Batteriepacks die Batteriespannung an dem Spannungsversorgungsausgang der analogen Stromversorgungsschaltung und an einem Hilfsspannungsausgang nicht mehr bereitgestellt wird, um das Batteriepack vor weiterer Entladung zu schützen.

Dieses Verfahren ermöglicht eine Spannungsversorgung des Fahrzeugs und der internen Komponenten der Batterie ohne eigenen Controller mithilfe einer analogen Schaltung und einem integrierten Spannungswandler. Der Spannungswandler kann als Schutz vor kritischer Tiefenentladung durch das BMS komplett deaktiviert werden, um die Batterie zu schützen. Das Verfahren eignet sich auch dazu, neben diesen externen Verbrauchern auch interne Komponenten, wie beispielsweise Steuerungen in Li-Ionen Batterien, die eine geringere Spannung als die Batteriespannung benötigen, zu versorgen, die Herab- oder Heraufsetzung der Spannung kann durch den Spannungswandler durchgeführt werden. Bei Nutzung des hier vorgestellten Verfahrens kann auf den Einsatz externer DC/DC-Wandler verzichtet werden, um diese Spannung bereitzustellen.

Weitere Vorteile und Einzelheiten der Erfindung werden anhand der in den schematischen Figuren dargestellten Ausführungsbeispiele näher erläutert. Hierbei zeigen:
- Figur 1: ein Schaltbild eines erfindungsgemäßen Batteriesystems 100 für ein elektrisch betriebenes Fahrzeug, insbesondere Flurförderzeug mit einer erfindungsgemäßen Stromversorgungseinrichtung; und
- Figur 2: eine schematische Darstellung eines erfindungsgemäßen Verfahrens 300 zur Stromversorgung eines elektrisch betriebenen Fahrzeugs, insbesondere Flurförderzeugs.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

In dieser Offenbarung werden Batteriesysteme und Batteriepacks beschrieben. Heutige Batteriesysteme verwenden meist Batteriepacks mit Lithium-Ionen-Batteriezellen. Darunter versteht man Batteriezellen auf der Basis von Lithium-Verbindungen in allen drei Phasen der elektrochemischen Zelle. Die reaktiven Materialien sowohl in der negativen als auch in der positiven Elektrode sowie der Elektrolyt enthalten Lithiumionen. Lithium-Ionen-Batteriezellen weisen im Vergleich zu anderen Zelltypen eine hohe spezifische Energie auf, erfordern jedoch in den meisten Anwendungen elektronische Schutzschaltungen, da sie sowohl auf Tiefentladung als auch Überladung empfindlich reagieren. Solche Schutzschaltungen sind im Batteriesystem, beispielsweise im Batteriemanagementsystem (BMS) realisiert.

Ein Batteriepack ist ein Verbund aus einer Vielzahl von Einzelbatteriezellen in Serien- und/oder Parallelverschaltung, die zu einer Batterie verschaltet sind. Solche Batteriesysteme verfügen in der Regel auch über eine Steuerung, hier beispielsweise innerhalb des Batteriemanagementsystems (BMS) implementiert, die durch so genanntes "Cell-Balancing" den Ladezustand aller Batteriezellen in dem Batteriesystem aneinander angleicht.

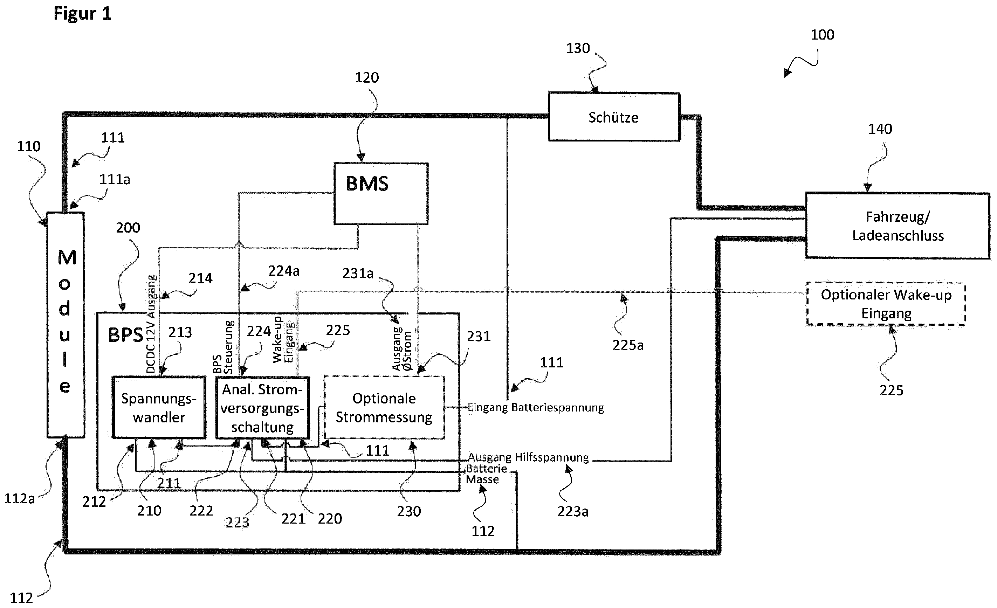

Figur 1 zeigt ein Schaltbild eines erfindungsgemäßen Batteriesystems 100 für ein elektrisch betriebenes Fahrzeug, insbesondere Flurförderzeug mit einer erfindungsgemäßen Stromversorgungseinrichtung.

Das Batteriesystem 100 umfasst eine Stromversorgungseinrichtung 200, wie im Folgenden beschrieben, zur Stromversorgung des elektrisch betriebenen Fahrzeugs, mit einem Spannungswandler 210, beispielsweise einem DC/DC-Wandler, einer analogen Stromversorgungsschaltung 220 und einem optionalen Stromsensor 230 zur Strommessung eines Batteriestromes.

Das Batteriesystem 100 umfasst ein Batteriepack 110 mit einem ersten Anschluss 111a zur Bereitstellung einer Batteriespannung 111 und einem zweiten Anschluss 112a zum Anschluss an Masse 112 bzw. eine Referenzspannung. Das Batteriepack 110 besteht aus einer Mehrzahl von Batteriemodulen, welche ihrerseits aus einer Mehrzahl von Batteriezellen bestehen, beispielsweise Lithium-Ionen Zellen.

Die analoge Stromversorgungsschaltung 220 der Stromversorgungseinrichtung 200 ist hier an die Batteriespannung 111 des Batteriepacks 110 elektrisch angeschlossen.

Das Batteriesystem 100 umfasst ein Batteriemanagementsystem 120 (BMS) zum Bereitstellen eines Steuersignals 224a an einem Steuereingang 224 der analogen Stromversorgungsschaltung 220.

Das Batteriemanagementsystem 120 ist ausgebildet, bei Erkennen einer kritischen Tiefenentladung des Batteriepacks 110 eine Information über die kritische Tiefenentladung des Batteriepacks 110 durch das Steuersignal 224a an die Stromversorgungseinrichtung 200 zu übermitteln, um das Batteriepack 110 vor weiterer Entladung zu schützen.

Zudem kann das Batteriemanagementsystem 120 bei Erkennen einer Überladung des Batteriepacks 110 eine entsprechende Information durch das Steuersignal 224a an die Stromversorgungseinrichtung 200 übermitteln, um die Stromversorgungseinrichtung 200 vor einer Stromversorgung mittels einer übergeladenen Batterie zu schützen.

Das Batteriesystem 100 umfasst ferner Schütze 130, welche ausgebildet sind, den Stromkreis zwischen den beiden Anschlüssen 111a, 112a des Batteriepacks 110 und den elektrischen Komponenten des Fahrzeugs bei einem kritischen Strom, wie er bei Kurzschluss auftritt, zu unterbrechen.

Zudem umfasst das Batteriesystem 100 einen Fahrzeug- und Ladeanschluss 140 zum Anschließen des Batteriepacks 110 an eine Ladeinfrastruktur, um das Batteriepack 110 zu laden oder um ein Fahrzeug anzuschließen.

Die Stromversorgungseinrichtung 200 dient zur Stromversorgung des elektrisch betriebenen Fahrzeugs mittels des Batteriepacks 110, solange die Schütze 130 das Fahrzeug nicht mit elektrischer Energie versorgen.

Die Stromversorgungseinrichtung 200 umfasst eine analoge Stromversorgungsschaltung 220, wie oben erwähnt, die an die Batteriespannung 111 des Batteriepacks 110 anschließbar ist, und einen Steuereingang 224 zum Erhalt eines Steuersignals 224a umfasst, sowie einen Spannungsversorgungsausgang 222 zum Bereitstellen der Batteriespannung 111 basierend auf dem Steuersignal 224a.

Die Stromversorgungseinrichtung 200 umfasst einen Spannungswandler 210, wie oben erwähnt, mit einem Wandlereingang 211, der an den Spannungsversorgungsausgang 222 der analogen Stromversorgungsschaltung 220 oder direkt an den Anschluss 111 der Batterie angeschlossen ist; und einem Wandlerausgang 213. Der Spannungswandler 210 ist ausgebildet, die an dem Wandlereingang 211 anliegende Batteriespannung 111 in eine Versorgungsspannung 214 zu wandeln und zur Stromversorgung der Batteriekomponenten, wie z.B. dem BMS 120, an dem Wandlerausgang 213 bereitzustellen.

Die analoge Stromversorgungsschaltung 220 ist ausgebildet, bei einer durch das Steuersignal 224a angezeigten kritischen Tiefenentladung des Batteriepacks 110 die Batteriespannung 111 an den Spannungsversorgungsausgängen 222 und 223 nicht mehr bereitzustellen, um das Batteriepack 110 vor weiterer Entladung zu schützen.

Das Steuersignal 224a kann, wie in Figur 1 dargestellt, von dem Batteriemanagementsystem 120 bereitgestellt und an die analoge Stromversorgungsschaltung 220 übertragen werden.

Das Batteriemanagementsystem 120 kann beispielsweise über Informationen verfügen, welche eine solche kritische Tiefenentladung des Batteriepacks 110 anzeigen, und diese Information über das Steuersignal 224a der analogen Stromversorgungsschaltung 220 anzeigen.

Die analoge Stromversorgungsschaltung 220 kann ausgebildet sein, die Batteriespannung 111 basierend auf analoger Logik an dem Spannungsversorgungsausgang 222 bereitzustellen. Das heißt, die analoge Stromversorgungsschaltung 220 kann ohne Controller, also ohne digitale Logik ausgeführt sein.

Beispielsweise kann die analoge Stromversorgungsschaltung 220 über einen analogen Komparator verfügen, an dessen erstem Eingang die Batteriespannung 111 anliegt, und an dessem zweiten Eingang das Steuersignal 224a anliegt. Wenn die Batteriespannung 111 am ersten Eingang größer ist als das Steuersignal 224a am zweiten Eingang (oder auch umgekehrt), kann der Komparator die Batteriespannung 111 auf den Ausgang des Komparators durchschalten, wo er am Spannungsversorgungsausgang 222 und 223 der analogen Stromversorgungsschaltung dem Spannungswandler 210 bereitgestellt werden kann. Anderenfalls wird die Batteriespannung 111 nicht auf den Ausgang des Komparators durchgeschaltet und am Spannungsversorgungsausgang 222 und 223 der analogen Stromversorgungsschaltung 220 steht keine Batteriespannung 111 bereit.

Die analoge Stromversorgungsschaltung 220 kann einen Hilfsspannungsanschluss 223 zur Bereitstellung einer Hilfsspannung 223a an einem Fahrzeug- oder Ladeanschluss 140, wie in Figur 1 dargestellt, umfassen.

Die Hilfsspannung 223a wird hier nur aus der Stromversorgungsschaltung 220 nach außen zum Fahrzeugstecker geleitet. Eine andere Stromrichtung ist nicht zulässig. Der Spannungswandler 210 wird immer nur direkt aus der Batteriespannung 111 versorgt.

Der Spannungswandler 210 wird hier ausschließlich über die Batteriespannung 111 versorgt. Über den Hilfsspannungsanschluss 223 empfängt die Batterieeinheit bzw. das Batteriepack 110 keine Leistung.

Die analoge Stromversorgungsschaltung 220 kann ausgebildet sein, die Durchleitung der Batteriespannung 111 zu dem Hilfsspannungsanschluss 223 zu unterbrechen, wenn die Batteriespannung zu gering wird (d.h., eine vorgegebene Schwellspannung unterschreitet) oder die Stromabnahme an dem Hilfsspannungsanschluss 223 durch das Fahrzeug zu groß wird (d.h., eine vorgegebene Stromschwelle überschreitet).

Die Stromversorgungseinrichtung 200 kann optional einen Stromsensor 230 umfassen, der an die Batteriespannung 111 des Batteriepacks 110 anschließbar ist und ausgebildet ist, einen Eigenverbrauch der Stromversorgungseinrichtung 200 und einen entnommenen Strom an dem Hilfsspannungsanschluss 223 zu erfassen.

Der Stromsensor 230 kann einen Messwertausgang 231 umfassen, der ausgebildet sein kann, eine Information 231a über den erfassten Batteriestrom anzuzeigen, insbesondere dem Batteriemanagementsystem 120 anzuzeigen, wie in Figur 1 dargestellt.

Die analoge Stromversorgungsschaltung 220 kann einen Wake-up Eingang 225 umfassen, wie in Figur 1 illustriert, der ausgebildet sein kann, ein Wake-up Signal 225a zu empfangen. Die analoge Stromversorgungsschaltung 220 kann ausgebildet sein, bei Empfang des Wake-up Signals 225a die Batteriespannung 111 wieder an dem Spannungsversorgungsausgang 222 bereitzustellen.

Das Wake-up Signal 225a kann beispielsweise ein Signal eines Tasters sein. Alternativ kann das Wake-up Signal 225a ein Datenpaket einer Kommunikationsschnittstelle, insbesondere ein CAN-Bus Datenpaket sein.

Mit dem Wake-up Signal 225a kann die analoge Stromversorgungsschaltung 220 von extern wieder "aufgeweckt" bzw. in den normalen Betriebsmodus geschaltet werden, in dem die Batteriespannung 111 dem Spannungswandler 210 zur Verfügung gestellt wird, um damit die Versorgungsspannung 214 für die internen Batteriekomponenten, wie z.B. dem BMS 120, zu erzeugen. Das Wake-up Signal 225a sollte daher nur in einem Zustand gesendet werden, in dem sich das Batteriepack 110 im tiefentladenen Zustand befindet und sich ein Ladegerät am Ladeanschluss 140 befindet, das die Batterie wieder laden kann. Nach dem Senden des Wake-up Signals 225a werden die Komponenten des Batteriepacks 110 bzw. der Batterie aus der Restspannung der Batterie versorgt, um einen Ladevorgang durch das Schließen der Schütze zu ermöglichen.

Die Stromversorgungseinrichtung kann ferner eine Schmelzsicherung umfassen, die zwischem dem Hilfsspannungsanschluss 223 223 der Stromversorgungsschaltung 220 und dem Fahrzeuggeschaltet ist (nicht in Figur 1 dargestellt).

Die Stromversorgungseinrichtung kann eine Regelungseinheit umfassen (nicht dargestellt), die ausgebildet sein kann, einen an dem Hilfsspannungsanschluss 223 bereitgestellten Ausgangsstrom auf einen Maximalwert zu begrenzen, der unterhalb einer Auslöseschwelle der Schmelzsicherung liegt.

Die Ausgangsspannung 213 des Spannungswandlers 210 ist nur zur internen Versorgung der Batteriekomponenten gedacht. Gegebenenfalls kann diese auch ein Diagnosegerät mit Spannung versorgen, nicht aber das Fahrzeug. Der Ausgang 223 bzw. Hilfsspannungsanschluss 223 versorgt das Fahrzeug.

Der Spannungswandler 210 kann ferner ausgebildet sein, die an dem Spannungsversorgungsausgang 222 bereitgestellte Batteriespannung 111 in eine Versorgungsspannung 214 zur Stromversorgung elektrischer Komponenten, wie z.B. des BMS 120, des Batteriepacks 110 zu wandeln, welche eine kleinere oder größere Versorgungsspannung benötigen als die von dem Batteriepack 110 bereitgestellte Batteriespannung 111.

Das oben beschriebene Batteriesystem 100 kann in einem Flurförderzeug eingesetzt werden, um das Flurförderzeug permanent mit Strom zu versorgen, solange das Batteriepack 110 bzw. das Batteriemanagementsystem 120 keine kritische Tiefenentladung des Batteriepacks 110 anzeigt.

Im Folgenden werden weitere Ausgestaltungen des Batteriesystems und der Stromversorgungseinrichtung beschrieben.

In einer weiteren Ausgestaltung misst das System den im Standby verbrauchten Strom und liefert diesen als Messwert an das BMS zurück.

In einer weiteren Ausgestaltung ist die externe Wake-Up Quelle aus dem Tiefentladeschutz durch CAN-Botschaften bzw. Nachrichten vom Ladegerät realisiert.

In einer weiteren Ausgestaltung kann die externe Hilfsspannung vom BMS abgeschaltet werden, ohne die interne Spannungsversorgung zu unterbrechen.

In einer weiteren Ausgestaltung wird die externe Hilfsspannung abgeschaltet, wenn die Verbindung zum Fahrzeug durch Abstecken unterbrochen wird.

In einer Ausgestaltung wird die Spannungsversorgung zum externen Verbraucher (Fahrzeug) so schnell durch eine Regelung auf einen Maximalwert unterhalb der Auslöseschwelle einer vorgeschalteten Schmelzsicherung begrenzt, dass diese Sicherung auch bei einem externen Kurzschluss nicht auslöst.

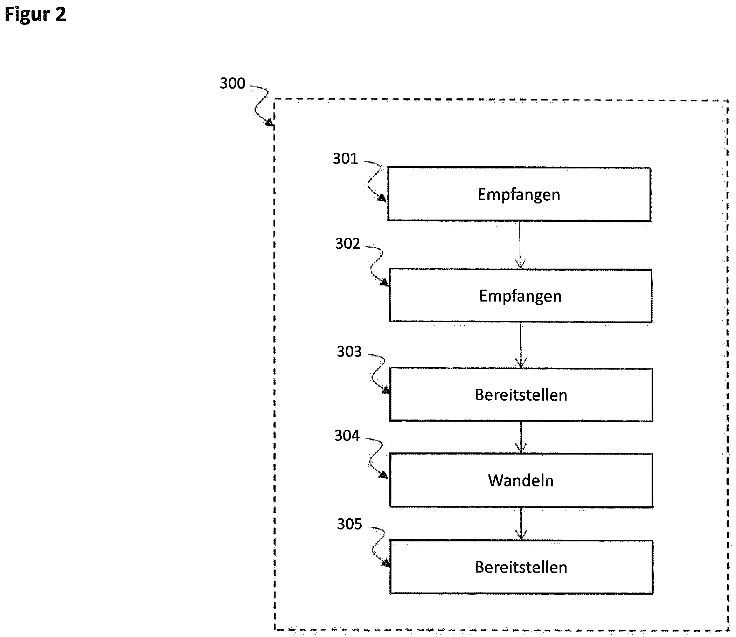

Figur 2 zeigt eine schematische Darstellung eines erfindungsgemäßen Verfahrens 300 zur Stromversorgung eines elektrisch betriebenen Fahrzeugs, insbesondere Flurförderzeugs.

Das Verfahren 300 dient zur Stromversorgung eines elektrisch betriebenen Fahrzeugs mit einem Batteriepack 110, insbesondere eines Flurförderzeugs.

Das Verfahren 300 umfasst: Empfangen 301 eines Steuersignals 224a an einem Steuereingang 224 einer analogen Stromversorgungsschaltung 220 einer Stromversorgungseinrichtung 200, wie beispielsweise oben zu Figur 1 beschrieben.

Das Verfahren 300 umfasst: Empfangen 302 einer Batteriespannung 111 an einem Batteriespannungseingang 221 der analogen Stromversorgungsschaltung 220, wie beispielsweise oben zu Figur 1 beschrieben.

Das Verfahren 300 umfasst: Bereitstellen 303 der Batteriespannung 111 an einem Spannungsversorgungsausgang 222 der analogen Stromversorgungsschaltung 220 und an einem Hilfsspannungsanschluss 223 basierend auf dem Steuersignal 224a, wie beispielsweise oben zu Figur 1 beschrieben.

Das Verfahren 300 umfasst: Wandeln 304 der an dem Spannungsversorgungsausgang 222 bereitgestellten Batteriespannung 111 in eine Versorgungsspannung 214 durch einen Spannungswandler 210 der analogen Stromversorgungsschaltung 220, wie beispielsweise oben zu Figur 1 beschrieben.

Das Verfahren 300 umfasst: Bereitstellen 305 der Versorgungsspannung 214 zur Stromversorgung von Komponenten des Batteriepacks 110 bzw. der Batterie an einem Wandlerausgang 213 des Spannungswandlers 210; wobei bei einer durch das Steuersignal 224a angezeigten kritischen Tiefenentladung des Batteriepacks 110 die Batteriespannung 111 an dem Spannungsversorgungsausgang 222 der analogen Stromversorgungsschaltung 220 und an dem Hilfsspannungsanschluss 223 nicht mehr bereitgestellt wird, um das Batteriepack 110 vor weiterer Entladung zu schützen, wie beispielsweise oben zu Figur 1 beschrieben.

Ferner betrifft die Erfindung ein Computerprogramm zur Ausführung dieses Verfahrens 300 auf einem Computer.

## Patentansprüche

1. Stromversorgungseinrichtung (200) zur Stromversorgung eines elektrisch betriebenen Fahrzeugs mittels eines Batteriepacks (110), insbesondere eines Flurförderzeugs, wobei die Stromversorgungseinrichtung (200) folgendes umfasst:
eine analoge Stromversorgungsschaltung (220), die an eine Batteriespannung (111) des Batteriepacks (110) anschließbar ist, und einen Steuereingang (224) zum Erhalt eines Steuersignals (224a) umfasst, sowie einen Spannungsversorgungsausgang (222) zum Bereitstellen der Batteriespannung (111) basierend auf dem Steuersignal (224a); und
einen Spannungswandler (210) mit einem Wandlereingang (211), der an den Spannungsversorgungsausgang (222) der analogen Stromversorgungsschaltung (220) angeschlossen ist; und einem Wandlerausgang (213), wobei der Spannungswandler (210) ausgebildet ist, die an dem Wandlereingang (211) anliegende Batteriespannung (111) in eine Versorgungsspannung (214) zu wandeln und sowohl zur Stromversorgung von Komponenten des Batteriepacks (110) an dem Wandlerausgang (213), als auch ungewandelt als Hilfsspannung (223a) dem Fahrzeug bereitzustellen;
wobei die analoge Stromversorgungsschaltung (220) ausgebildet ist, bei einer durch das Steuersignal (224a) angezeigten kritischen Tiefenentladung des Batteriepacks (110) die Batteriespannung (111) an dem Spannungsversorgungsausgang (222) und an einem Hilfspannungsausgang (223) nicht mehr bereitzustellen, um das Batteriepack (110) vor weiterer Entladung zu schützen.

2. Stromversorgungseinrichtung (200) nach Anspruch 1,
wobei die analoge Stromversorgungsschaltung (220) ausgebildet ist, die Batteriespannung (111) basierend auf analoger Logik an dem Spannungsversorgungsausgang (222) bereitzustellen.

3. Stromversorgungseinrichtung (200) nach einem der vorstehenden Ansprüche,
wobei die analoge Stromversorgungsschaltung (220) einen Hilfsspannungsanschluss (223) zur Bereitstellung einer Hilfsspannung (223a) an einem Fahrzeug-Ladeanschluss (140) umfasst.

4. Stromversorgungseinrichtung (200) nach Anspruch 3, umfassend:
einen Stromsensor (230), der an die Batteriespannung (111) des Batteriepacks (110) anschließbar ist und ausgebildet ist, einen Eigenverbrauch der Stromversorgungseinrichtung (200) und einen entnommenen Strom an dem Hilfsspannungsanschluss (223) zu erfassen.

5. Stromversorgungseinrichtung (200) nach Anspruch 4,
wobei der Stromsensor (230) einen Messwertausgang (231) umfasst, der ausgebildet ist, eine Information (231a) über den erfassten Batteriestrom anzuzeigen, insbesondere einem Batteriemanagementsystem (120) anzuzeigen.

6. Stromversorgungseinrichtung (200) nach einem der vorstehenden Ansprüche,
wobei die analoge Stromversorgungsschaltung (220) einen Wake-up Eingang (225) umfasst, der ausgebildet ist, ein Wake-up Signal (225a) zu empfangen,
wobei die analoge Stromversorgungsschaltung (220) ausgebildet ist, bei Empfang des Wake-up Signals (225a) die Batteriespannung (111) wieder an dem Spannungsversorgungsausgang (222) bereitzustellen.

7. Stromversorgungseinrichtung (200) nach Anspruch 9,
wobei das Wake-up Signal (225a) ein Signal eines Tasters ist; oder
wobei das Wake-up Signal (225a) ein Datenpaket einer Kommunikationsschnittstelle, insbesondere ein CAN-Bus Datenpaket ist.

8. Stromversorgungseinrichtung (200) nach einem der vorstehenden Ansprüche, umfassend:
eine Schmelzsicherung, die zwischem dem Hilfsspannungsanschluss (223) der Stromversorgungsschaltung (220) und dem Fahrzeug geschaltet ist; und
eine Regelungseinheit, die ausgebildet ist, einen an dem Hilfsspannungsanschluss (223) der Stromversorgungsschaltung (220) bereitgestellten Ausgangsstrom auf einen Maximalwert zu begrenzen, der unterhalb einer Auslöseschwelle der Schmelzsicherung liegt.

9. Stromversorgungseinrichtung (200) nach einem der vorstehenden Ansprüche,
wobei der Spannungswandler (210) ferner ausgebildet ist, die an dem Spannungsversorgungsausgang (222) bereitgestellte Batteriespannung (111) in eine Versorgungsspannung (214) zur Stromversorgung elektrischer Komponenten des Batteriepacks (110) zu wandeln, welche eine kleinere oder größere Versorgungsspannung benötigen als die von dem Batteriepack (110) bereitgestellte Batteriespannung (111).

10. Batteriesystem (100) für ein elektrisch betriebenes Fahrzeug, insbesondere ein Flurförderzeug, umfassend:
eine Stromversorgungseinrichtung (200) nach einem der vorstehenden Ansprüche zur Stromversorgung des elektrisch betriebenen Fahrzeugs;
ein Batteriepack (110) mit einem ersten Anschluss (111a) zur Bereitstellung der Batteriespannung (111), wobei die analoge Stromversorgungsschaltung (220) der Stromversorgungseinrichtung (200) an die Batteriespannung (111) des Batteriepacks (110) elektrisch angeschlossen ist; und
ein Batteriemanagementsystem (120) zum Bereitstellen des Steuersignals (224a) an dem Steuereingang (224) der analogen Stromversorgungsschaltung (220);
wobei das Batteriemanagementsystem (120) ausgebildet ist, bei Erkennen einer kritischen Tiefenentladung des Batteriepacks (110) eine Information über die kritische Tiefenentladung des Batteriepacks (110) durch das Steuersignal (224a) an die Stromversorgungseinrichtung (200) zu übermitteln, um das Batteriepack (110) vor weiterer Entladung zu schützen.

11. Flurförderzeug mit einem Batteriesystem (100) nach Anspruch 10.

12. Verfahren (300) zur Stromversorgung eines elektrisch betriebenen Fahrzeugs mit einem Batteriepack (110), insbesondere eines Flurförderzeugs, wobei das Verfahren (300) folgendes umfasst:
Empfangen (301) eines Steuersignals (224a) an einem Steuereingang (224) einer analogen Stromversorgungsschaltung (220) einer Stromversorgungseinrichtung (200);
Empfangen (302) einer Batteriespannung (111) an einem Batteriespannungseingang (221) der analogen Stromversorgungsschaltung (220);
Bereitstellen (303) der Batteriespannung (111) an einem Spannungsversorgungsausgang (222) der analogen Stromversorgungsschaltung (220) und an einem Hilfsspannungsanschluss (223) basierend auf dem Steuersignal (224a);
Wandeln (304) der an dem Spannungsversorgungsausgang (222) bereitgestellten Batteriespannung (111) in eine Versorgungsspannung (214) durch einen Spannungswandler (210) der analogen Stromversorgungsschaltung (220); und
Bereitstellen (305) der Versorgungsspannung (214) zur Stromversorgung von Komponenten des Batteriepacks (110) an einem Wandlerausgang (213) des Spannungswandlers (210);
wobei bei einer durch das Steuersignal (224a) angezeigten kritischen Tiefenentladung des Batteriepacks (110) die Batteriespannung (111) an dem Spannungsversorgungsausgang (222) der analogen Stromversorgungsschaltung (220) und an dem Hilfsspannungsanschluss (223) nicht mehr bereitgestellt wird, um das Batteriepack (110) vor weiterer Entladung zu schützen.
